Europäisches Patentamt

European Patent Office

Office européen des brevets

(19)

(11) Publication number: **0 144 582**

**A2**

(12) **EUROPEAN PATENT APPLICATION**

(21) Application number: 84111462.2

(22) Date of filing: 26.09.84

(51) Int. Cl.⁴: **B 60 C 7/00**

(30) Priority: 15.12.83 IT 2418383

(43) Date of publication of application:
19.06.85 Bulletin 85/25

(84) Designated Contracting States:
BE DE GB

(71) Applicant: INDUSTRIE PIRELLI S.p.A.
Piazzale Cadorna, 5
I-20123 Milan(IT)

(72) Inventor: Tangorra, Giorgio
Via Ramazzotti, 12
Monza (Milan)(IT)

(74) Representative: Mariani, Giorgio, Dr. et al,
INDUSTRIE PIRELLI S.p.A. Direzione Brevetti Piazzale
Cadorna, 5
I-20123 Milano(IT)

(54) Solid rubber tyre.

(57) A solid rubber tyre for vehicle wheels is realized to comprises an annular band (1) made of a deformable material - rubber, in particular, into which there is embedded a ribbon-like element (5) formed in such a way as to have its generatrices substantially parallel to the axis of said band, and in such a way as to separate internally, the layers (6) of deformable material having a thickness (s) – measured in the radial direction, that is lesser than 80% the minimum width (1) of the band itself – measured in the direction of said axis; said ribbon-like element (5) having a thickness (s') lesser than 20% the said layers' thickness s, with presenting (when the ribbon-like element is disposed in a substantially plane configuration) a modulus of elasticity – at least in a direction contained on the plane of the said configuration, that is at least greater than ten times the modulus of elasticity of the deformable material.

Fig.1

EP 0 144 582 A2

SOLID RUBBER TYRE                    0144582

S P E C I F I C A T I O N

The present invention refers to a solid rubber tyre of the type comprising an annular band made of a deformable material - in particular: elastomer or polyurethan rubber, which is bonded directly to the wheel-rim. As is already known, even if the wheels of this type result as being very simple to construct, with not requiring any particular intervention for being maintained in exercise condition (such as when involving the maintaining of a correct inflation pressure in conventional tyres), they nevertheless present some drawbacks.

First and foremost, during rolling - particularly when high pressures are exchanged between wheel and rolling plane, they disperse a considerable amount of energy through hysteresis, in connection with the deformation of the above-said band. Therefore, vehicles that are equipped with such tyres, require high horse-powers for actioning them. What is more, these tyres can only be utilized for very low speeds.

Moreover, the above-said tyres present a low rigidity - measured in the direction of the vertical loads acting upon them and hence - if the above-said band should be of the same width that is normally used for vehicle tyres, they will only be in a condition to bear low loads. The utilization of said tyres for bearing higher loads involves providing dimensions for said band that are quite inadmissible for normal applications.

The aim of the present invention is to realize a solid tyre for vehicle wheels, of the above-indicated type - but which are devoid of the above-mentioned drawbacks and, in particular, which should therefore be in a condition to disperse, through hysteresis, a considerably low energy — so as to allow for applications at high speeds, and also with a low horse-powers for actioning the vehicles, and which have a rigidity that proves sufficient for supporting rather high load-capacities — even with having the usual widths for the band.

On the basis of the present invention, a solid tyre for vehicle wheels is realized, comprising an annular band made of a deformable material — rubber, in particular, characterized by the fact that in said band there is embedded a ribbon-like element — formed in such a way as to have its generatrices substantially parallel to the axis of said annular band and so as to separate, inside said band, the layers of said material having a thickness (measured in the radial direction) of lesser than 80% the minimum width of said annular band (measured in the direction of said axis), said ribbon-like element having a thickness lesser than 20% the thickness of said layers and presenting — when said ribbon-like element is disposed in a substantially plane configuration, a modulus of elasticity (measured at least in the direction comprised in the plane of said configuration), of at least ten times greater than the modulus of elasticity of said deformable material.

The surfaces of said ribbon-like element are bonded to the surfaces of said deformable material with which they are coupled, in such a way as to substantially prevent any relative shiftings taking place along the surfaces themselves.

The said ribbon-like element — that is embedded in the annu-

**0144582**

lar band, is shaped like a circle, or else like a spiral, and it can be constructed either out of a metallic tape, out of a cord-fabric tape, out of a netting tape, or else, out of a rubber tape – to which a stiffening agent has been added.

For having a better understanding of the present invention, there will now be given, solely by way of non-limiting example, the description of some forms of realization – as illustrated in the attached drawings, whereby:

Figs. 1 and 2 show sections, effectuated with meridian planes, of two diverse forms of realization of the solid tyre, according to the present invention;

Fig. 3 shows a section, effectuated with a meridian plane, of a solid tyre corresponding to a further form of realization of the invention;

Figs. 4 and 5 show sections of the solid tyre of Fig. 3, effectuated with a plane orthogonal to its axis, apt for illustrating two modalities for realizing the solid tyre itself;

Figs. from 6 to 8 show sections – effectuated with meridian planes, of the solid-tyre, corresponding to further forms of realization of the invention.

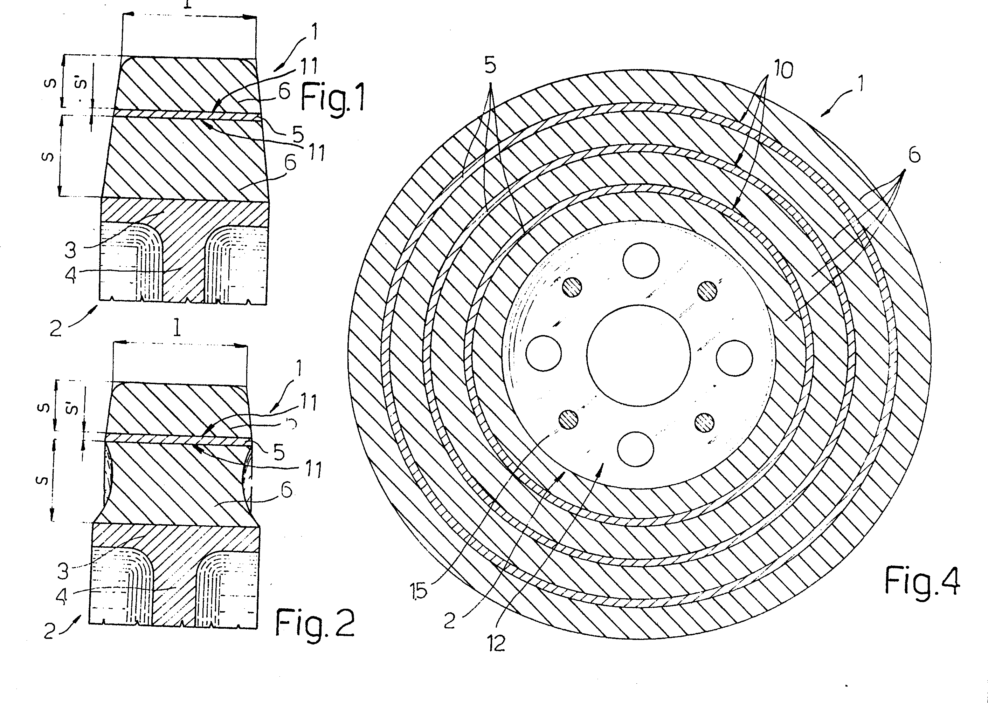

First and foremost, with reference to the forms of realization of FIGS. 1 and 2, the solid tyre of the invention substantially comprises an annular band made of a deformable material, that is indicated in its complex whole with the numeral 1, and a rim 2 - apt for supporting the band itself, appropriately comprising a substantially cylindrical crown 3 and a disc-shaped part 4.

The band 1 is constructed out of any whatsoever deformable material - in particular: a rubber, an elastomer, or a polyurethan. The said band can be bonded to the rim 2 in any whatsoever convenient way - for example, if made of rubber: through vulcanzing it directly on the cylindrical surface of the crown 3, or else through joining it to the surface itself - through adhesive means, through a forced binding, or through any whatsoever other modality.

On the basis of the invention, into said band there is embedded a ribbon-like element 5, formed in such a way as to have its generatrices substantially parallel to the axis of the band 1, and in such a manner as to separate, inside of the band itself, the layers 6 of the said deformable material having a prefixed thickness. In the instance of those forms of realization seen in Figs. 1 and 2, the ribbon-like element 5 is formed in such a way as to only separate two layers of deformable material - presupposed to have different thicknesses.

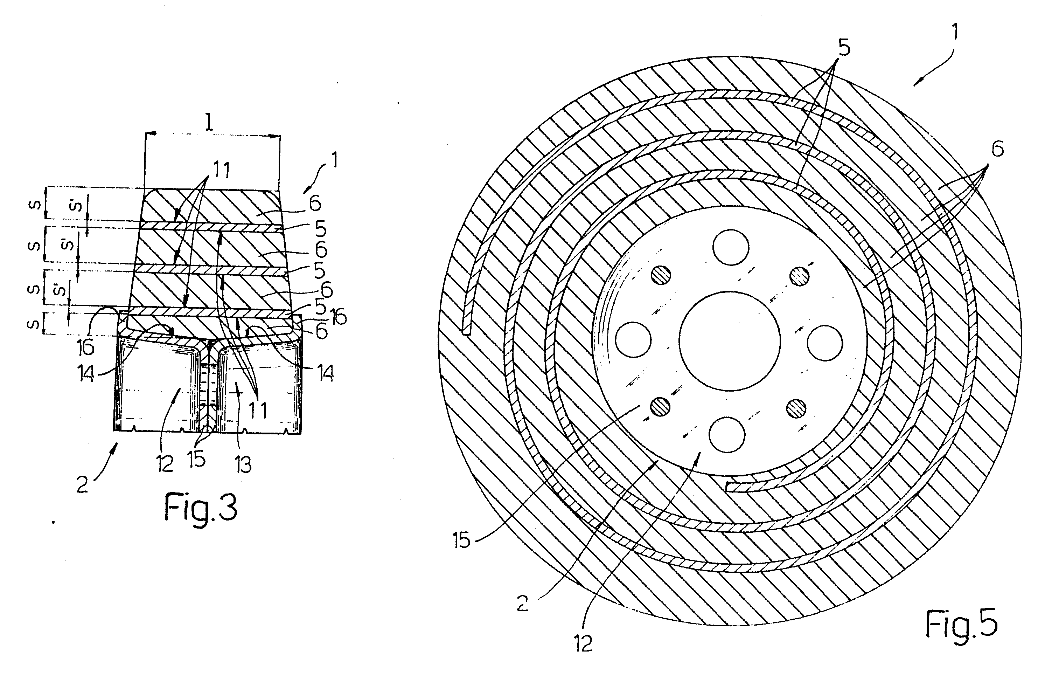

In the form of realization of Fig. 3, the ribbon-like element 5 is formed in such a way as to separate, inside the band 1, four layers - all having the same thickness of material, with the exception of the radially innermost layer, which has a lesser thickness to that of the previous layers.

On the basis of the invention, the thickness $s$ of each of the layers 6 (measured in the radial direction) is lesser than 80% the minimum width $1$ of the annular band 2, measured in the direction of the axis of the band itself.

The ribbon-like element 5, when disposed in a substantially plane configuration - and hence, before being inserted into the band itself, presents a modulus of elasticity (measured at least in the direction comprised within the plane of the above-said configuration) that is at least ten times greater than the modulus of elasticiity of the deformable material constituting the band 1.

The above-said material constituting the ribbon-like element, can therefore consist of a material that presents, in the plane of the configuration, a diverse resistence in different directions, comprised in the same plane. For example, it could be a material that presents (in a direction comprised in said plane) a considerably greater resistence to that existing in the other directions comprised in the plane itself; or else, it could be a material which presents substantially the same resistence in a certain number of directions comprised in the previously-defined plane - for example, which presents the same resistence in two orthogonal directions. To end with, and for preference, the above-said material can present the same resistence - in any whatsoever direction comprised in the plane itself.

Materials that are suited for being utilized for constructing the above-defined ribbon-like element, must therefore present a modulus of elasticity - at least in one of the previously defined directions, whereby the resistence of the material itself is higher, and at least ten times greater than the modulus of elasticity of the deformable material constituting the band 1.

On the basis of the invention, the thickness $s'$ of the ribbon-like element 5, is 20% lesser than the thickness $s$ of the layers 6 of deformable material.

For realizing a configuration – of the ribbon-like element 5, that is apt for originating the layers 6 inside of the band 1, said element can be shaped into the form of a plurality of coaxial circles 10 that are independent of one another – as can be seen in the form of realization given in Fig. 1; or else, it can be in the form of a single spiral – as instead, can be seen in the form of realization given in Fig. 5.

Even though, for preference, the ribbon-like element 5 is constituted out of a metallic material – for example: steel, it could also be constructed out of any whatsoever other material that has a modulus of elasticity (measured in the previously defined direction) that is higher than the above-mentioned value. For the sake of convenience, this ribbon-like element can be constructed out of a fabric-cord tape; or else out of either a textile or a metallic netting tape; or even simply out of a rubber layer into which a stiffening agent has been added – such as: carbon-black, felted materials or homogeneous layers of any whatsoever stiffening material.

The surfaces 11, of the ribbon-like element 5, are bonded to the corresponding surfaces of the layers 6 – with which they are coupled, in such a way as to substantially prevent any relative shiftings taking place along the surfaces themselves. To this purpose, when the deformable material of the band 1 is constituted out of rubber, the latter can be vulcanized directly on the surfaces 11 of the ribbon-like element 5; or else, said connection can be realized mechanically - for example, by roughening the surfaces 11 of the ribbon-like element 5 - by causing small nicks to be made on said surfaces;  or else by forming, in any whatsoever suitable way, slight undulations, or even holes.  Bonding agents can also be used - disposed in-between the coupled surfaces of the ribbon-like element 5 and the layers 6, for realizing said joining.

In the form of realization of Fig. 3, the bonding - between band 1 and rim, is realized by shaping the latter in two separate parts 12 and 13 - each one of which substantially comprises a conical housing-support 14 connected to a disc-shaped part 15, and an annular shoulder 16.

When the rim has the structure indicated, it is in a condition for blocking the band 1 - through the action of the mutual pressures exchanged between its inner surface and the outer surfaces of the conical-housing 14 of the rim parts 12 and 13.  Whenever such a constructive disposition is realized for the rim, quite conveniently the radially innermost layer 6 can have a lesser thickness to that of the other layers (as in the form of realization shown in Fig. 3) for the purpose of bearing the radial forcing pressures, through the radially inner layer of the ribbon-like element 5 - which, in such an instance, would be found at a small radial distance away from the above-mentioned coupled surfaces.

In the form of realization shown in the Figs. from 6 to 8, the band 1 substantially presents the same structure illustrated with reference to the previous forms of realization, and it is provided with a tread-band 17 that is constructed in any whatsoever appropriate way and coupled with the outer surface of the band 1 - as can be seen clearly in said

Figures. Moreover, the section of the tread-band itself – that is effectuated with a meridian plane, can be similar to that of a conventional vehicle tyre. A solid tyre for wheels, of this type, can result as particularly suited for being utilized for motor-cars.

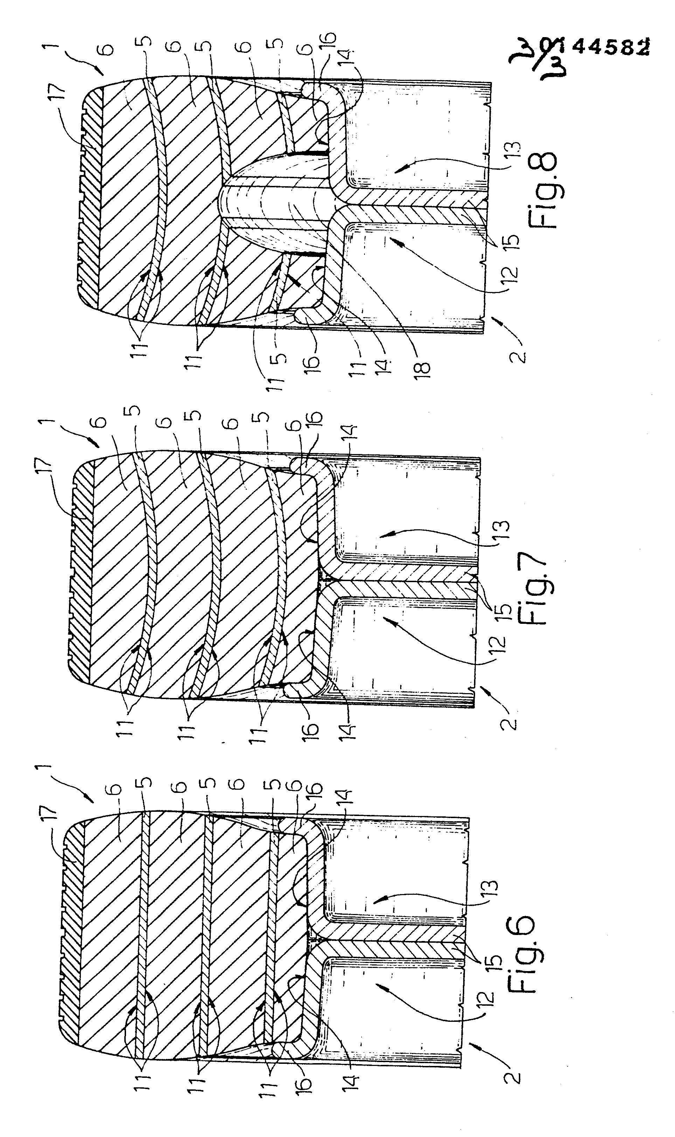

In the form of realization shown in Figs. 7 and 8, the ribbon-like element 5 is shaped in such a way as to originate – in any whatsoever meridian plane of the band 1, tape-layers that are slightly curved, with their convexity facing the axis of the band itself – as is clearly seen in Figure. In the form of realization of Fig. 8, there is moreover foreseen a substantially annular inner cavity 18, apt for reducing the rigidity of the band in the sense of the load that acts upon the solid tyre wheel.

The solid tyre described in the present invention, has proved to possess a plurality of favourable properties that render it to be suited not only for the usual applications (where conventional tyres are not utilized), but even for substituting these in applications for motor-cars.

First and foremost in fact, during the rolling of the tyre on the ground, and also in the presence of high vertical loads, the dispersion of any energy through hysteresis, results as being extremely low – and in the order of those dispersion had in conventional tyres.

Moreover, even the rigidity – measured in the direction in which the vertical loads exchanged between wheel and ground act, results as being greater and well over the rigidity obtainable in wheels that only comprise an annular band of a deformable material. Hence, the solid tyre, of the invention, is also in a condition for supporting particularly high vertical loads - and without giving rise to any excessive over-all deformations.

The combining of these two favourable characteristics, is derived substantially from the operation of restraining the transversal deformations that is exercised due to the action of the ribbon-like element 5 on the various layers 6 of deformable material in the band 1. In fact, it is evident that - owing to the close connection between the coupled surfaces of the ribbon-like element and the surfaces of the layers 6, each of said layers can be deformed transversally (i.e. in any whatsoever direction comprised in a plane orthogonal to a radius of the band) to a controlled extent - and however, very limitedly. Hence, when the solid tyre of the invention, is compared with any other tyre-wheel having equal dimensions, but comprising an annular band of a deformable material, it will result that the hysteresis, found in the first case, is well below that found in the second case. Moreover, the transversal restraining action, exercised by the ribbon-like element 5, on the in-between deformable material layers 6, also increases the rigidity of the entire whole - and therefore, the modulus of the elasticity-compression, valued for vertical loads on the composite structure thus obtained, is well over that had in an annular band having the same dimensions - but constructed out of a deformable material. In fact it has been noticed that the ratio, between the moduli of elasticity relative to the two previously indicated cases, can be comprised between 5 and 50.

The shaping of the ribbon-like element 5 (as shown in Figs. 7 and 8), i.e. in a manner such as to originate (in any whatso-

0144582

ever meridian plane of the band) slightly curved tape-layers - with their convexity facing the axis of the band itself, can result as being favourable for improving the transversal stability of the tyre itself. Moreover, the cavities made inside of the band 2 (just as numeral 18 shown in Fig. 8), can contribute towards reducing the tyre's rigidity, in the manner desired. It is therefore evident that, by opportunely selecting the number of the layers 6 which are separated by the ribbon-like element 5, and by selecting the form and the sectional dimensions of the band itself, it will be possible to obtain a solid-tyre for vehicle wheels that presents the desired rigidity which is apt for satisfying particular conditions of exercise - with moreover, still having an extremely low hysteresis.

Even though the ribbon-like elements 5 have been shown - in the Figures of the attached drawing TABLES, to have an axial width that is substantially equal to that of the annular band 1 in which they are embedded, it is obvious that said axial width of the ribbon-like element could even be slightly lesser than the axial width of the band itself - so much so that, on said tyre's sidewalls, the material of the band covers said ribbon-like element. In this way, the band material exercises a certain protective action over the ribbon-like element.

It is clearly understood that to the forms of realization of the present invention, there can also be carried out modifications and alternative variations - both, in the form, as well as in the disposition of the various parts, without this exiting in any way from the ambit of the inventive idea itself.

0144582

WHAT IS CLAIMED IS:

1.      Solid-tyre for vehicle wheels, comprising an annular band (1) made of a deformable material – rubber, in particular, characterized by the fact that in said band there is embedded a ribbon-like element (5) formed in such a way as to have its generatrices substantially parallel to said annular band and so as to separate, inside said band, the layers (6) of said deformable material having a thickness (s) – measured in the radial direction, of lesser than 80% the minimum width (1) of said annular band – measured in the direction of said axis, said ribbon-like element (5) having a thickness (s') lesser than 20% the thickness (s) of said layers and with presenting, when said ribbon-like element is disposed in a substantially plane configuration, a modulus of elasticity – measured at least in a direction comprised in the plane of said configuration, that is at least ten times greater than the modulus of elasticity of said deformable material.

2.      Solid-tyre for vehicle wheels, according to CLAIM 1, characterized by the fact that the surfaces of said ribbon-like element are joined to the surfaces of said deformable material with which the are coupled, in such a way as to substantially prevent any relative shiftings taking place along said surfaces.

3.      Solid-tyre for vehicle wheels, according to CLAIM 1, characterized by the fact that said ribbon-like element embedded in said annular band, is circularly shaped.

4.      Solid-tyre for vehicle wheels, according to CLAIM 1 or 2, characterized by the fact that said ribbon-like element, embedded inside said annular band, is spirally shaped.

5. Solid-tyre for vehicle wheels, according to one of the previous Claims, characterized by the fact that the axial-width of said ribbon-like element, is slightly lesser than the axial-width of said band, in such a manner that the band material covers said ribbon-like element, on the sidewalls of the tyre.

6. Solid-tyre for vehicle wheels, according to one of the previous Claims, characterized by the fact that said ribbon-like element is constructed out of a metallic tape.

7. Solid-tyre for vehicle wheels, according to one of the Claims from 1 to 5, characterized by the fact that said ribbon-like element is constructed out of a fabric-cord tape.

8. Solid-tyre for vehicle wheels, according to one of the Claims from 1 to 5, characterized by the fact that said ribbon-like element is constructed out of a netting tape.

8. Solid-tyre for vehicle wheels, according to one of the previous Claims, characterized by the fact that said ribbon-like element is constructed with at least one rubber layer, into which a stiffening material has also been added.

9. Solid-tyre for vehicle wheels, according to one of the previous Claims, characterized by the fact that it comprises morever, a circular tread-band (17) disposed on said annular band.

10. Solid-tyre for vehicle wheels, according to one of the previous Claims, characterized by the fact that said ribbon-like element (5) is formed in such a way as to originate - in any whatsoever meridian plane of the band, tape layers (11) that are slightly curved, with having their convexity facing the axis of said annular band.

0144582

Fig.1

Fig.2

Fig.4

0144582

Fig.5

Fig.3

Fig.6

Fig.7

Fig.8